# EUROPÄISCHE PATENTSCHRIFT

(11) **EP 0 858 357 B1**
(45) Veröffentlichungstag und Bekanntmachung des Hinweises auf die Patenterteilung: **09.06.1999**
(21) Anmeldenummer: 96934634.5
(22) Anmeldetag: 11.10.1996
(51) Int. Cl.: A62D 3/00, C02F 3/34, B09C 1/10

(54) **VERFAHREN ZUM ABBAU VON CHINOLONEN UND NAPHTHYRIDONEN**
METHODS FOR DECOMPOSING QUINOLONES AND NAPHTHYRIDONES
PROCEDES DE DECOMPOSITION DES QUINOLONES ET DES NAPHTYRIDONES

(30) Priorität: 24.10.1995 DE 19539445; 30.04.1996 DE 19617283
(43) Veröffentlichungstag der Anmeldung: 19.08.1998
(73) Patentinhaber: BAYER AG, 51368 Leverkusen (DE)
(72) Erfinder: WETZSTEIN, Heinz-Georg, D-51377 Leverkusen (DE); RAST, Hans-Georg, D-51465 Bergisch Gladbach (DE); KARL, Wolfgang, D-51519 Odenthal (DE); MARTENS, Rainer, D-38116 Braunschweig (DE); ZADRAZIL, Frantisek, D-38543 Hillersee (DE)
(86) Internationale Anmeldenummer: EP9604421
(87) Internationale Veröffentlichungsnummer: WO9715354

(56) Entgegenhaltungen:
- EP-A- 0 192 237
- DE-A- 4 314 352
- DE-C- 4 104 624
- US-A- 5 143 827

## Beschreibung

Die vorliegende Erfindung betrifft zwei Verfahren zum Abbau von antimikrobiell, insbesondere antibakteriell wirkenden Chinolon- und Naphthyridoncarbonsäuren und ihrer Derivate mit Hilfe von Holzfäulepilzen.

Antimikrobiell wirkende Substanzen finden breiten Einsatz in der Medizin und Veterinärmedizin. Mit der Herstellung dieser Wirkstoffe einher gehen Probleme bei der Beseitigung von wirkstoffhaltigen Produktionsrückständen, Abwässern und Verpackungen. Probleme bereiten auch wirkstoffhaltige Abwässer von Großverbrauchern wie Kliniken, Tierzüchtern und Mästereien. Weitere Probleme kann es mit der Dekontaminierung von Wässern oder Böden geben, wenn bei Unfällen Wirkstoff unerwünscht freigesetzt wird.

In derartigen Fällen kann die antimikrobielle Aktivität der Wirkstoffe den üblichen Abbau durch Bakterien in Böden, Wässern, Kläranlagen verhindern. Es kann u.U. sogar zu einer unerwünschten Störung, z.B. biologisch arbeitender Kläranlagen, kommen, wenn größere Mengen wirkstoffhaltiger Abwässer verarbeitet werden müssen, d.h. in all diesen Fällen ist eine aufwendige Vorbehandlung der Abwässer, Rückstände etc. erforderlich.

Für diese Fälle sollte eine einfache Behandlung gefunden werden, durch die die Wirkstoffe so weit abgebaut werden, daß sie ihre antibiotische Wirkung verlieren und ihr weiterer Abbau durch die üblichen biologischen Abbaumethoden erfolgen kann.

Aus a) DE-OS 4 104 624 und b) EP 0 192 237 A1 waren Verfahren zum Abbau von organischen Schadstoffen mit Hilfe von ligninabbauenden Pilzen bekannt.

Allerdings wird der Abbau in a) nur am Beispiel aromatischer Kohlenwasserstoffe gezeigt. Halogenhaltige Kohlenwasserstoffe können nach DE-OS 4 104 624 nicht auf diese Weise abgebaut werden.

In EP 0 192 237 A1 sind einige Beispiele für chlorierte Kohlenwasserstoffe genannt, die durch den Weißfäulepilz Phanerochaete chrysosporium abgebaut werden.

Es war nicht zu erwarten, daß die fluorhaltigen heteroaromatischen Chinolone und Naphthyridone durch Weißfäulepilze und insbesondere Braunfäulepilze oder gar holzabbauende Ascomyceten angegriffen werden. Im Gegenteil, es besteht die vielfach öffentlich geäußerte Überzeugung, daß es keine Mikroorganismen gibt, die solche Verbindungen abbauen können (vgl. z.B. in der schwedischen Zeitschrift "Land" Juni 1995, Seite 4). In der wissenschaftlichen Literatur gibt es keinen Hinweis auf einen signifikanten Abbau solcher Verbindungen durch Mikroorganismen. Ebenso werden den Braunfäulepilzen allgemein nur sehr eingeschränkte Fähigkeiten bei der Spaltung von aromatischen Ringen mit zudem deutlich geringeren Kapazitäten (im Vergleich zu Weißfäulepilzen) zugesprochen (J. Buswell, 1991). In den Abstracts der "Division of Agrochemicals of the American Chemical Society 1993 issue No. 44" wird in einem Abstract (No. 92) über die extrem geringe Bioverfügbarkeit von ¹⁴C-markiertem Sarafloxacin in Erdproben berichtet. Es wurde festgestellt, daß Sarafloxacin durch Mikroorganismen im Boden nicht nennenswert abgebaut wurde.

Die vorliegende Erfindung betrifft
1. Verfahren zur Behandlung von antimikrobiell, insbesondere antibakteriell wirkenden Chinolon- und Naphthyridoncarbonsäuren und deren Derivaten mit Holz-, insbesondere Weißfäule- oder Braunfäulepilzen, gegebenenfalls in Gegenwart von Wasser und/oder inerten festen oder flüssigen Substraten sowie weiteren Hilfsstoffen.
2. Verfahren zum Abbau von antibakteriell und antimikrobiell wirkenden Chinolon- und Naphthyridoncarbonsäuren und deren Derivaten, dadurch gekennzeichnet, daß die Wirkstoffe mit Holz-, insbesondere Weiß- oder Braunfäulepilzen gegebenenfalls in Gegenwart von Wasser und/oder inerten festen oder flüssigen Substraten sowie weiteren Hilfsstoffen behandelt werden.
3. Verfahren zur Behandlung von Abwässern die antibakteriell und antimikrobiell wirkende Chinolon- und Naphthyridoncarbonsäuren und deren Derivate enthalten mit Holz- insbesondere Weiß- oder Braunfäulepilzen.
4. Verfahren zur Behandlung von Mist aus Intensivtierhaltung, der antibakteriell und antimikrobiell wirkende Chinolon- und Naphthyridoncarbonsäuren und deren Derivate enthält mit Holz-, insbesondere Weiß- oder Braunfäulepilzen.
5. Verfahren zur Behandlung von Böden die antibakteriell und antimikrobiell wirkende Chinolon- und Naphthyridoncarbonsäuren und deren Derivate enthalten mit Holz-, insbesondere Weiß- oder Braunfäulepilzen.

Die bekanntesten holzzerstörenden Basidiomyceten werden in 2 große Gruppen unterteilt: zum einen in die Lignin abbauenden Weißfäulepilze, zum anderen in die Cellulose und Hemicellulose abbauenden Braunfäulepilze, welche Lignin im wesentlichen nicht abbauen, sondern lediglich durch Hydroxylierung und Demethylierungen modifizieren. Weißfäulepilze zeichnen sich durch extrazelluläre Enzyme wie Ligninperoxidasen, Manganperoxidasen und Laccasen aus, die den Braunfäulepilzen in der Regel fehlen. Beide Gruppen lassen sich durch chemische Nachweismethoden unterscheiden (s. z.B. Stalpers, 1978, Studies in Mycology, No. 16, Centralbureau voor Schimmelcultures, Baarn, Holland). Bei Braunfäulepilzen kommt dem Hydroxylradikal die entscheidende Bedeutung für die Abbauaktivität zu. Die großen Unterschiede zwischen Weiß- und Braunfäulepilzen, insbesondere hinsichtlich der molekularen Mechanismen des Holzabbaus, sind in der Fachliteratur dokumentiert (siehe z.B. Evans et al., FEMS Microbiological Reviews 13 (1994) 235-240).

Als Beispiele für Gattungen der Holzfäulepilze, die in den erfindungsgemäßen Verfahren eingesetzt werden können, seien genannt:

### Weißfäulepilze:

Bjerkandera sp.
Cladoderris sp.
Coriolopsis sp.
Coriolus sp.
Ganoderma sp.
Irpex sp.
Phanerochaete sp.
Phellinus sp.
Phlebia sp.
Pleurotus sp.
Trametes sp.
Trichaptum sp.

### Braunfäulepilze:

Fomitopsis sp.
Gloeophyllum sp.
Leatiporus sp.
Pholiota sp.
Serpula sp.

### Streuabbauer:

Agrocybe sp.
Hypholoma sp.
Stropharia sp.

### Sonstige:

Xylaria sp. (Ascomycet)
Bevorzugt seien die folgenden Spezies beispielhaft genannt:

### Weißfäulepilze:

Bjerkandera adusta DSM 4708
Cladoderris dendritica DSM 9611
Coriolopsis rigida DSM 9596
Coriolus sp.
Ganoderma lucidum DSM 9621
Irpex lacteus DSM 9595
Phanerochaete chrysosporium DSM 9620
Phanerochaete chrysosporium DSM 1556
Phanerochaete chrysosporium ATCC 24725
Phellinus gilvus DSM 9602
Phlebia radiata DSM 5111
Pleurotus sp. DSM 9618
Trametes versicolor DSM 3086
Trametes villosa DSM 9589
Trichaptum bysogenum DSM 9597

### Braunfäulepilze:

Fomitopsis spraguei DSM 9600
Gloeophyllum sepiarium DSM 6420
Gloeophyllum striatum DSM 9594
Gloeophyllum striatum DSM 9592
Gloeophyllum striatum DSM 10335
Gloeophyllum trabeum DSM 3087
Leatiporus sulphureus DSM 2785
Pholiota aurivella DSM 5070
Serpula lacrymans DSM 8728

### Streuabbauer:

Agrocybe sp.
Hypholoma sp.
Stropharia rugosoannulata DSM 9616
Stropharia sp.

### Sonstige:

Xylaria digitata DSM 914 (Ascomycet)
Ganz besonders bevorzugt seien genannt:

### Weißfäulepilze:

Irpex lacteus DSM 9595
Phanerochaete chrysosporium DSM 1556
Phanerochaete chrysosporium DSM 9620

### Braunfäulepilze:

Gloeophyllum striatum DSM 9592
Gloeophyllum striatum DSM 9594
Gloeophyllum striatum DSM 10335

### Streuabbauer:

### Stropharia rugosoannulata DSM 9616

Holzfäulepilze sind bekannt. Die obengenannten Spezies von Holzfäulepilzen sind in öffentlichen Sammlungen von Mikroorganismen enthalten und frei zugänglich, z.B. die mit DSM gekennzeichneten bei der Deutschen Sammlung für Mikroorganismen (DSMZ), Mascheroder Weg 1b, 38116 Braunschweig.

Es ist ohne weiteres möglich, eine der genannten Spezies durch eine andere derselben Gruppe zu ersetzen.

Als antibakteriell und antimikrobiell wirkende Chinolon- und Naphthyridoncarbonsäuren seien die Verbindungen der folgenden Formeln (I) und (II) genannt: 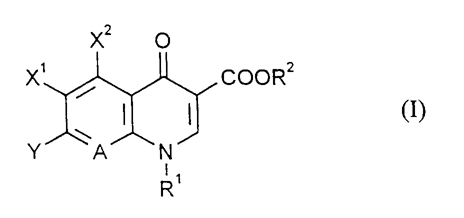 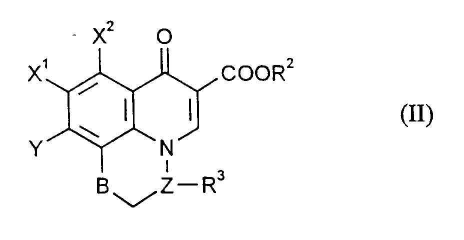 in welchen
- X¹ und X²: unabhängig voneinander für Wasserstoff, Halogen, C₁₋₄-Alkyl, C₁₋₄-Alkoxy, NH₂ stehen,
- Y: für Reste der Strukturen 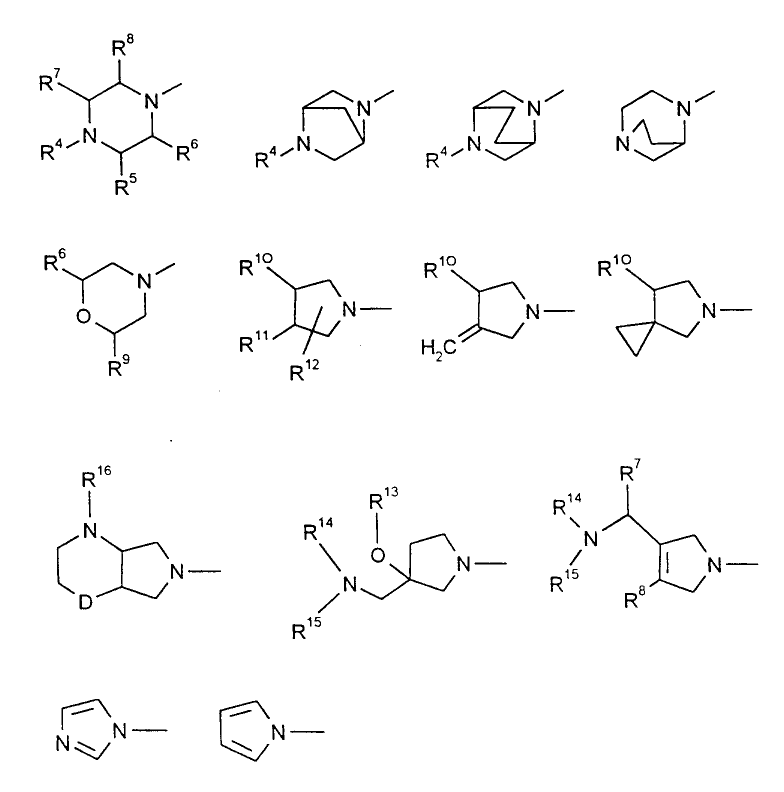 steht, worin
- R¹⁶: = H, -CH₃, -CH=CH-CO₂R^{16'}, -CH₂-CH₂-CO₂R¹⁶', -CH₂-CO-CH₃, -CH₂-CH₂-CN
- R¹⁶': = Me, Et
- D: = O, -CH₂-
- R⁴: für Wasserstoff, gegebenenfalls durch Hydroxy oder Methoxy substituiertes geradkettiges oder verzweigtes C₁-C₄-Alkyl, Cyclopropyl, Acyl mit 1 bis 3 C-Atomen steht,
- R⁵: für Wasserstoff, Methyl, Phenyl, Thienyl oder Pyridyl steht,
- R⁶: für Wasserstoff oder C₁₋₄-Alkyl steht,
- R⁷: für Wasserstoff oder C₁₋₄-Alkyl steht,
- R⁸: für Wasserstoff oder C₁₋₄-Alkyl steht,
- R⁹: für Wasserstoff, Methyl oder -CH₂-NR⁷R⁸ steht,
- R¹⁰: für Wasserstoff, C₁₋₄-Alkyl, Amino, gegebenenfalls durch Hydroxy substituiertes Alkyl- oder Dialkylamino mit 1 oder 2 C-Atomen im Alkylteil, Amino-C₁₋₄-alkyl, C₁₋₄-Alkylamino-C₁₋₄-alkyl oder 1-Imidazolyl steht,
- R¹¹: für Wasserstoff, Hydroxy, Methoxy, Methylthio, Halogen, Methyl, Hydroxymethyl steht,
- R¹²: für Wasserstoff oder Methyl steht,
- R¹³: für Wasserstoff oder C₁₋₄-Alkyl steht,
- R¹⁴: für Wasserstoff oder C₁₋₄-Alkyl steht und
- R¹⁵: für Wasserstoff oder C₁₋₄-Alkyl steht,
- R¹: für Wasserstoff, einen gegebenenfalls halogensubstituierten Alkylrest mit 1 bis 3 Kohlenstoffatomen, Cyclopropyl, Methoxy, 4-Fluorphenyl, 2,4-Difluorphenyl oder Methylamino steht,
- R²: für Wasserstoff oder gegebenenfalls durch Methoxy oder 2-Methoxyethoxy substituiertes Alkyl mit 1 bis 6 Kohlenstoffatomen sowie Cyclohexyl, Benzyl, 2-Oxopropyl, Phenacyl, Ethoxycarbonylmethyl, Pivaloyloxymethyl steht,
- R³: für Wasserstoff, Methyl oder Ethyl steht und
- X¹ und Y: gemeinsam mit den angrenzenden C-Atomen für einen Dioxolanylrest oder Dioxoamylrest stehen.
- A: für Stickstoff oder =CH-, =C(Halogen)-, = C(OCH₃)- =C(CH₃)-, =C(CN)- steht,
- B: für Sauerstoff, gegebenenfalls durch Methyl oder Phenyl substituiertes =N- sowie =CH₂ steht,
- Z: für =CH- oder =N- steht,
und deren pharmazeutisch verwendbare Hydrate, Säureadditionssalze und Salze mit Basen. Die Verbindungen der Formeln I und II können in Form ihrer Racemate oder in enantiomeren Formen vorliegen.

Bevorzugt sind Verbindungen der Formeln (I) und (II)
in welchen
- R¹: für gegebenenfalls durch Fluor substituiertes C₁-C₃-Alkyl oder für Cyclopropyl steht,
- R¹: für einen Alkylrest mit 1 bis 3 Kohlenstoffatomen, Cyclopropyl, 2-Fluorethyl, Methoxy, 4-Fluorphenyl, 2,4-Difluorphenyl oder Methylamino steht,
- R²: für Wasserstoff oder gegebenenfalls durch Methoxy oder 2-Methoxyethoxy substituiertes Alkyl mit 1 bis 6 Kohlenstoffatomen sowie Cyclohexyl, Benzyl, 2-Oxopropyl, Phenacyl, Ethoxycarbonylmethyl, Pivaloyloxymethyl steht,
- R³: für Wasserstoff, Methyl oder Ethyl steht und
- A: für Stickstoff oder =CH-, =C(Halogen)-, = C(OCH₃)- =C(CH₃)-=C(CN)- steht,
- B: für Sauerstoff, gegebenenfalls durch Methyl oder Phenyl substituiertes =N- sowie =CH₂ steht,
- Z: für =CH- oder =N- steht,
- X¹ und X²: unabhängig voneinander für Wasserstoff, Halogen oder NH₂ stehen,
- Y: für Reste der Strukturen 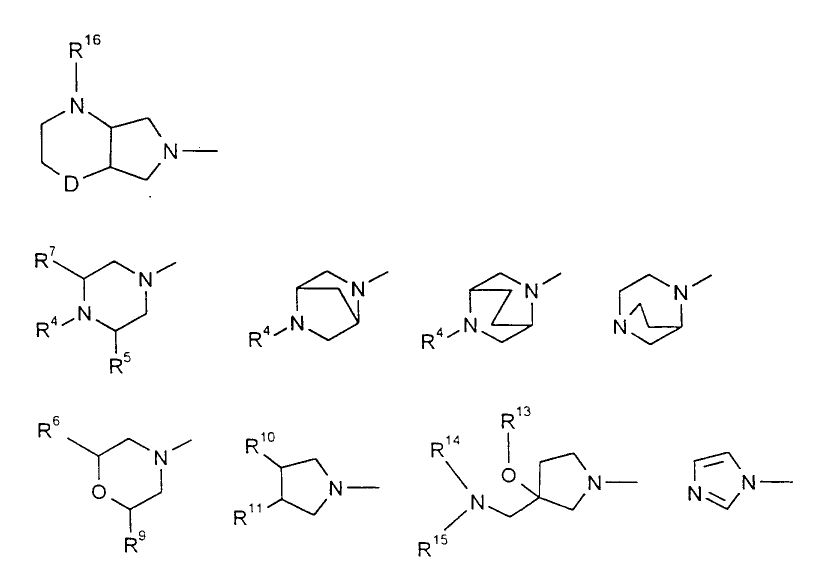 steht, worin
- R¹⁶: = H, -CH₃,
- D: = O, -CH₂-
- R⁴: für Wasserstoff, gegebenenfalls durch Hydroxy substituiertes geradkettiges oder verzweigtes C₁-C₃-Alkyl, Oxalkyl mit 1 bis 4 C-Atomen steht,
- R⁵: für Wasserstoff, Methyl oder Phenyl steht,
- R⁶: für Wasserstoff oder Methyl steht,
- R⁷: für Wasserstoff oder Methyl steht,
- R⁹: für Wasserstoff, Methyl oder -CH₂NH₂ steht,
- R¹⁰: für Wasserstoff, Methyl, Amino, Methylamino, Dimethylamino, Aminomethyl, Methylaminomethyl oder Ethylaminomethyl steht,
- R¹¹: für Wasserstoff, Hydroxy, Methyl, Fluor, Methyl oder Hydroxymethyl steht,
- R¹³: für Wasserstoff oder Methyl steht,
- R¹⁴: für Wasserstoff oder Methyl steht,
- R¹⁵: für Wasserstoff oder Methyl steht,
und deren pharmazeutisch verwendbaren Hydrate und Säureadditionssalze sowie ihre Alkali-, Erdalkali-, Silber- und Guanidiniumsalze.

Besonders bevorzugt sind Verbindungen der Formel (I), in welcher
- R¹: für einen Alkylrest mit 1 bis 3 Kohlenstoffatomen, Cyclopropyl, 2-Fluorethyl, Methoxy, 2,4-Difluorphenyl oder Methylamino steht,
- R²: für Wasserstoff oder gegebenenfalls durch Methoxy oder 2-Methoxyethoxy substituiertes Alkyl mit 1 bis 6 Kohlenstoffatomen sowie Cyclohexyl, Benzyl, 2-Oxopropyl, Phenacyl, Ethoxycarbonylmethyl, Pivaloyloxymethyl steht,
- A: für Stickstoff oder =CH-, =C(Halogen)-, =C(CH₃)-, =C(OCH₃)-, =C(CN)- steht,
- X¹ und X²: unabhängig voneinander für Wasserstoff, Fluor, NH₂ stehen,
- Y: für Reste der Strukturen 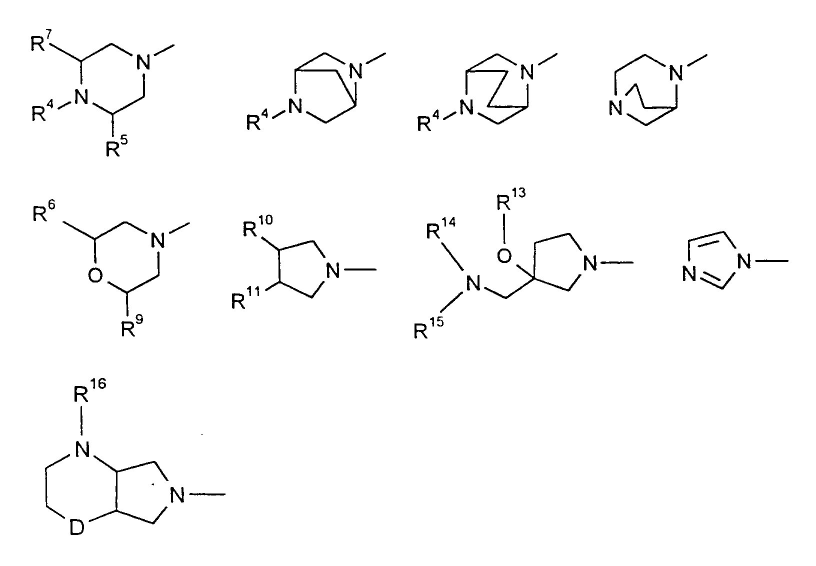 steht, worin
- R¹⁶: = H, -CH₃
- D: = O, -CH₂-
- R⁴: für Wasserstoff, gegebenenfalls durch Hydroxy substituiertes geradkettiges oder verzweigtes C₁-C₃-Alkyl, Hydroxyalkyl mit 1 bis 4 C-Atomen steht,
- R⁵: für Wasserstoff, Methyl oder Phenyl steht,
- R⁶: für Wasserstoff oder Methyl steht,
- R⁷: für Wasserstoff oder Methyl steht,
- R⁹: für Wasserstoff, Methyl oder -CH₂NH₂ steht,
- R¹⁰: für Wasserstoff, Methyl, Amino, Methylamino, Dimethylamino, Aminomethyl, Methylaminomethyl oder Ethylaminomethyl steht,
- R¹¹: für Wasserstoff, Hydroxy, Methyl, Fluor, Methyl oder Hydroxymethyl steht,
- R¹³: für Wasserstoff oder Methyl steht,
- R¹⁴: für Wasserstoff oder Methyl steht,
- R¹⁵: für Wasserstoff oder Methyl steht,
und deren pharmazeutisch verwendbaren Hydrate und Säureadditionssalze sowie ihre Alkali-, Erdalkali-, Silber- und Guanidiniumsalze.

Ganz besonders bevorzugt seien genannt die Wirkstoffe mit den common names Enrofloxacin, Ciprofloxacin, Danofloxacin, Ofloxacin, Norfloxacin, Benofloxacin, Sarafloxacin, Difloxacin, Orbifloxacin, Marbofloxacin und Oxolinsäure.

Insbesondere seien genannt die Wirkstoffe Enrofloxacin, Ciprofloxacin, Marbofloxacin, Ofloxacin, Norfloxacin und Oxolinsäure.

Das erfindungsgemäße Verfahren wird bevorzugt in flüssigen, festen oder halbfesten homogenen oder heterogenen Medien durchgeführt.

Diese enthalten neben dem abzubauenden Wirkstoff und dem Holzfäulepilz Lignin-, Lignocellulose- und/oder Cellulose-haltiges Material. Dazu zählen Stroh, Häcksel, Holz, Holzspäne, Holzmehl und Getreidemahlrückstand.

Die Verfahren lassen sich wie folgt beschreiben:
**1. Verfahren zum Abbau von in Wasser gelöstem Chinolon**
   Die Vorkultur eines der aufgeführten Holzfäulepilze, die
   - in Malzbouillon, welche Malzextrakt oder eine gleichwertige Kohlenstoff- und Energiequelle in der Konzentration von 1-50 g/l, bevorzugt 5-30 g/l, insbesondere 5-8 g/l, enthält,
   - bei 5-40°C, bevorzugt 15-30°C, insbesondere bei 18-22°C,
   - stehend oder geschüttelt, bevorzugt geschüttelt mit 80-120 Upm,
   - für einen Zeitraum von 3-28 Tagen, bevorzugt 5-14 Tage, insbesondere 5-7 Tage,
   - im Dunkeln, bei Tageslicht oder allen Zwischenstufen der Beleuchtung angezüchtet wurde,
      wird einem Spülwasser, z.B. aus dem Herstellprozess für ein chinolonhaltiges Arzneimittel, mit einem Gehalt von 0,01 bis 500 ppm, bevorzugt 0,1 bis 50 ppm, insbesondere 1 bis 20 ppm des Chinolons im Verhältnis von 0,01 bis 100 g Trockengewicht TG/l, bevorzugt 0,1 bis 10 g TG/l, insbesondere 1 bis 3 g TG/l, zugesetzt.

   Der pH der Suspension kann 3 bis 8, bevorzugt 4 bis 7, insbesondere 5 bis 6 betragen; Phosphat wird nicht hinzugefügt. Organische Säuren, wie z.B. Essigsäure oder Oxalsäure, können zum Einstellen des pH-Werts verwendet werden.
   Der Gehalt an Eisen²⁺ oder Eisen³⁺ sollte 0,1 bis 100 µM (10⁻⁶ Mol pro Liter), bevorzugt 1 bis 30 µM, insbesondere 2 bis 20 µM betragen,
   der Gehalt an NH₄⁺ kann 0,001 bis 20 mM (10⁻³ Mol pro Liter), bevorzugt 0,1 und 10 mM, insbesondere zwischen 0,1 bis 1 mM betragen.
   Der Gehalt an zweiwertigen Kationen soll zwischen 0,1 und 10 mM, bevorzugt 1 mM betragen (z.B. 0,2 mM CaCl₂ + 0,8 mM MgSO₄).
   Diese Suspension wird unter denselben Bedingungen inkubiert wie die Vorkultur.
   Die Zugabe von Coniferyl- oder Veratrylalkohol in einer Konzentration von 0,01 bis 10 mM, bevorzugt 0,1 bis 3 mM, insbesondere 0,5 bis 1 mM, hat eine Steigerung der Abbauaktivität für das Chinolon zur Folge.
**2. Verfahren zum Abbau von an Stroh, Mist oder Erdboden gebundenem Chinolon**
   Ausgehend von Stammkulturen von Holzfäulepilzen auf Petrischalen mit Malzagar werden Lignocellulose enthaltende Stoffe, insbesondere Stroh, Holzmehl oder Holzspäne, mit aus der Stammkultur ausgestochenen Agarblöcken beimpft, wobei 0,1 bis 100 g Agar pro kg festes Substrat, bevorzugt 1 bis 10 g Agar pro kg Substrat eingesetzt werden.
   Die das Chinolon (0,1 bis 200 ppm) enthaltende feste Matrix (Stroh, Mist, Boden, Schlamm) wird vor der Beimpfung mit Wasser bis zum Erreichen eines Wassergehalts von 10 bis 90 %, bevorzugt 40 bis 50 % (bezogen auf das Gewicht) versetzt.
   Bei der Beimpfung wird das Inokulum in der festen Matrix verteilt. Die nachfolgende Inkubation wird bei 5 bis 40°C, bevorzugt 15 bis 30°C, insbesondere bei 18 bis 22°C, durchgeführt.

Die folgenden Beispiele erläutern die erfindungsgemäßen Verfahren:

### Beispiele

### Beispiel 1

Ein Liter Spülwasser aus einem Formulierkessel mit einem Gehalt von 10 ppm Enrofloxacin wird mit einer Vorkultur von Gloeophyllum striatum DSM 9592 oder Gloeophyllum striatum DSM 10335 beimpft, wobei das Pilzmycel aus der Vorkultur in 1/4-konzentrierter Malzbouillon dergestalt in das Spülwasser zu übertragen ist, daß eine Konzentration von 2 g Trockengewicht pro Liter erreicht wird. Diese Suspension wird bei Paumtemperatur unter Schütteln bei 100 Upm im Dunkeln inkubiert. Nach 2 Wochen waren 10 bis 20 % des eingesetzten [Carbonyl-¹⁴C]-Enrofloxacins zu ¹⁴CO₂ abgebaut.

### Beispiel 2

1 kg Weizenstroh, das 2 mg Enrofloxacin adsorptiv gebunden enthielt, wurde mit 1 kg Wasser angefeuchtet und mit Gloeophyllum striatum DSM 9594 beimpft. Das Inokulum bestand aus 20 Agarblöcken von jeweils etwa 0,5 g Gewicht. Diese Blöckchen waren aus einer Vorkultur auf Malzagar aus der Pilzkolonie in einer Petrischale ausgestochen worden. Der Ansatz wurde bei Raumtemperatur im Dunkeln unter Begasung mit angefeuchteter Luft inkubiert. Nach 8 Wochen waren 50 % des Enrofloxacins abgebaut.

### Beispiel 3

0,5 kg angefeuchtete Holzspäne wurden mit Phanerochaeta chrysosporium DSM 9620 beimpft und 1 Woche bei Raumtemperatur vorinkubiert. Zu diesem Ansatz wurden 0,5 kg Mist aus einem Tierbestand, der mit Enroflaxacin behandelt worden war hinzugefügt. Der Enrofloxacingehalt im Mist betrug 2 ppm. Der Ansatz wurde bei Raumtemperatur inkubiert.

### Beispiel 4

0,1 kg Weizenstroh wurde mit 100 ml Wasser angefeuchtet und mit Gloeophyllum striatum DSM 9594 beimpft. Nach 7 Tagen Vorinkubation bei Raumtemperatur wurde das Stroh mit 0,6 kg Ackerboden (mit einem Wassergehalt von etwa 50 %) überschichtet, der 10 ppm Enrofloxacin enthielt, und bei Raumtemperatur inkubiert. Nach 15 Wochen waren 6 % des eingesetzten Enrofloxacins abgebaut.

## Patentansprüche

1. Verfahren zur Behandlung von antimikrobiell, insbesondere antibakteriell wirkenden Chinolon- und Naphthyridoncarbonsäuren und deren Derivaten mit Holzfäulepilzen gegebenenfalls in Gegenwart von Wasser und/oder inerten festen oder flüssigen Substraten sowie weiteren Hilfsstoffen.

2. Verfahren zum Abbau von antimikrobiell, insbesondere antibakteriell wirkenden Chinolon- und Naphthyridoncarbonsäuren und deren Derivaten, dadurch gekennzeichnet, daß die Wirkstoffe mit Holzfäulepilzen gegebenenfalls in Gegenwart von Wasser und/oder inerten festen oder flüssigen Substraten sowie weiteren Hilfsstoffen behandelt werden.

3. Verfahren zur Behandlung von Abwässern die antimikrobiell, insbesondere antibakteriell wirkende Chinolon- und Naphthyridoncarbonsäuren und deren Derivate enthalten mit Holzfäulepilzen.

4. Verfahren zur Behandlung von Mist aus Intensivtierhaltung der antimikrobiell, insbesondere antibakteriell wirkende Chinolon- und Naphthyridoncarbonsäuren und deren Derivate enthält mit Holzfäulepilzen.

5. Verfahren zur Behandlung von Böden die antimikrobiell, insbesondere antibakteriell wirkende Chinolon- und Naphthyridoncarbonsäuren und deren Derivate enthalten mit Holzfäulepilzen.

6. Verfahren gemäß Ansprüche 1 bis 5, dadurch gekennzeichnet, daß als Wirkstoff Enrofloxacin oder Ciprofloxacin vorhanden ist.

7. Verfahren gemäß der Ansprüche 1-6, dadurch gekennzeichnet, daß Weißfäulepilze für den Abbau eingesetzt werden.

8. Verfahren gemäß der Ansprüche 1-6, dadurch gekennzeichnet, daß Braunfäulepilze für den Abbau eingesetzt werden.

9. Verfahren gemäß der Ansprüche 1-6, dadurch gekennzeichnet, daß holzabbauende Ascomyceten eingesetzt werden.

## Claims

1. Process for the treatment of antimicrobially, in particular antibacterially, acting quinolone- and naphthyridonecarboxylic acids and derivatives thereof with wood rot fungi, if appropriate in the presence of water and/or inert solid or liquid substrates and further auxiliaries.

2. Process for the degradation of antimicrobially, in particular antibacterially, acting quinolone- and naphthyridonecarboxylic acids and derivatives thereof, characterized in that the active compounds are treated with wood rot fungi, if appropriate in the presence of water and/or inert solid or liquid substrates and further auxiliaries.

3. Process for the treatment of wastewaters which comprise antimicrobially, in particular antibacterially, acting quinolone- and naphthyridonecarboxylic acids and derivatives thereof with wood rot fungi.

4. Process for the treatment of manure from intensive animal husbandry which comprises antimicrobially, in particular antibacterially, acting quinolone-and naphthyridonecarboxylic acids and derivatives thereof with wood rot fungi.

5. Process for the treatment of soils which comprise antimicrobially, in particular antibacterially, acting quinolone- and naphthyridonecarboxylic acids and derivatives thereof with wood rot fungi.

6. Process according to Claims 1 to 5, characterized in that the active compound is enrofloxacin or ciprofloxacin.

7. Process according to Claims 1-6, characterized in that white rot fungi are employed for the degradation.

8. Process according to Claims 1-6, characterized in that brown rot fungi are employed for the degradation.

9. Process according to Claims 1-6, characterized in that wood-degrading Ascomycetes are employed.

## Revendications

1. Procédé de traitement d'acides quinolone - et naphtyridone-carboxyliques doués d'activité antimicrobienne, notamment antibactérienne, et de leurs dérivés, avec des champignons responsables de la pourriture du bois, le cas échéant en présence d'eau et/ou de substrats solides ou liquides inertes, ainsi que d'autres substances auxiliaires.

2. Procédé de dégradation d'acides quinolone - et naphtyridone-carboxyliques doués d'activité antimicrobienne, notamment bactérienne, et de leurs dérivés, caractérisé en ce que les substances actives sont traitées avec des champignons responsables de la pourriture du bois, le cas échéant en présence d'eau et/ou de substrats solides ou liquides inertes ainsi que d'autres substances auxiliaires.

3. Procédé de traitement avec des champignons responsables de la pourriture du bois, d'eaux usées qui contiennent des acides quinolone - et naphtyridone - carboxyliques doués d'activité antimicrobienne, notamment antibactérienne, et leurs dérivés.

4. Procédé de traitement avec des champignons responsables de la pourriture du bois, de fumier provenant d'élevages intensifs, qui contient des acides quinolone - et naphtyridone-carboxyliques doués d'activité antimicrobienne, notamment antibactérienne, et leurs dérivés.

5. Procédé de traitement avec des champignons responsables de la pourriture du bois, de sols qui contiennent des acides quinolone - et naphtyridone-carboxyliques doués d'activité antimicrobienne, notamment antibactérienne, et leurs dérivés.

6. Procédé suivant les revendications 1 à 5, caractérisé en ce que de l'enrofloxacine ou de la ciprofloxacine est présente comme substance active.

7. Procédé suivant les revendications 1 à 6, caractérisé en ce qu'on utilise des champignons responsables de la pourriture blanche pour la dégradation.

8. Procédé suivant les revendications 1 à 6, caractérisé en ce qu'on utilise des champignons responsables de la pourriture brune pour la dégradation.

9. Procédé suivant les revendications 1 à 6, caractérisé en ce qu'on utilise des ascomycètes décomposant le bois.
